# EUROPÄISCHE PATENTSCHRIFT

(11) **EP 1 512 211 B1**
(45) Veröffentlichungstag und Bekanntmachung des Hinweises auf die Patenterteilung: **08.08.2007**
(21) Anmeldenummer: 03738017.7
(22) Anmeldetag: 12.06.2003
(51) Int. Cl.: H02K 7/116, H02K 41/06

(54) **ELEKTROMOTORISCHER ANTRIEB MIT EINEM STATOR UND EINEM ROTOR IN KOMBINATION MIT EINEM EXZENTERGETRIEBE**
ELECTRIC MOTOR DRIVE WITH A STATOR AND A ROTOR IN COMBINATION WITH AN ECCENTRIC GEAR
SYSTEME D'ENTRAINEMENT A MOTEUR ELECTRIQUE, MUNI D'UN STATOR ET D'UN ROTOR, EN COMBINAISON AVEC UN MECANISME A EXCENTRIQUE

(30) Priorität: 13.06.2002 DE 10226249
(43) Veröffentlichungstag der Anmeldung: 09.03.2005
(73) Patentinhaber: Küster Automotive Door Systems GmbH, 35630 Ehringshausen (DE)
(72) Erfinder: GUTIERREZ, Carmelo, 35630 Ehringshausen (DE)
(74) Vertreter: Müller, Eckhard
(86) Internationale Anmeldenummer: PCT/EP2003/006145
(87) Internationale Veröffentlichungsnummer: WO 2003/107514

(56) Entgegenhaltungen:
- DE-A- 19 923 877
- DE-C- 19 622 060
- US-A- 5 479 058
- PATENT ABSTRACTS OF JAPAN vol. 4, no. 97 (E-18), 12. Juli 1980 (1980-07-12) -& JP 55 058768 A (HITACHI LTD), 1. Mai 1980 (1980-05-01)
- PATENT ABSTRACTS OF JAPAN vol. 1999, no. 3, 31. März 1999 (1999-03-31) -& JP 10 336996 A (NIDEC SHIMPO CORP), 18. Dezember 1998 (1998-12-18)
- PATENT ABSTRACTS OF JAPAN vol. 1999, no. 12, 29. Oktober 1999 (1999-10-29) -& JP 11 178312 A (ORIENTAL MOTOR CO LTD ), 2. Juli 1999 (1999-07-02)
- PATENT ABSTRACTS OF JAPAN vol. 15, no. 479 (E-1141), 5. Dezember 1991 (1991-12-05) -& JP 03 207258 A (KOBORI TAKEAKI), 10. September 1991 (1991-09-10)

## Beschreibung

Die Erfindung betrifft einem elektromotorischen Antrieb mit einem Stator und einem Rotor in Kombination mit einem Exzentergetriebe, welches wenigstens zwei in einer im wesentlichen ringförmigen Kammer übereinander angeordnete, exzentrisch versetzte Scheiben aufweist, die aufgrund der Antriebsbewegung des Antriebes mit ihrer Außenumfangswandung an einer Innenumfangswandung der Kammer abwälzen, wobei die Scheiben kreisringförmig angeordnete Bohrungen besitzen, in die Mitnehmerbolzen eintauchen, die mit einem Abtrieb verbunden sind.

Derartige elektromotorische Antriebe in Kombination mit einem Exzentergetriebe sind allgemein bekannt. Das Charakteristische eines Exzentergetriebes liegt in den sogenannten Cyclo-Zahnrädern, deren Außenprofil einen cycloiden Kurvenzug beschreibt.

Der allgemeine Aufbau eines Exzentergetriebes stellt sich wie folgt dar: In einem Gehäuse ist ein Bolzenring mit kreisringförmig angeordneten Außenbolzen untergebracht, wobei die Außenbolzen vorzugsweise Rollen tragen. An diesen Außenbolzen rollen wenigstens zwei, exzentrisch im Bolzenring angeordnete Kurvenscheiben ab, deren Außenumfangswandung beispielsweise durch einem cycloiden Kurvenzug gebildet ist.

Die wenigstens zwei Kurvenscheiben werden mittels einer Antriebswelle und eines Excenters in Antriebsbewegung versetzt, wobei die Antriebswelle beispielsweise von der Abtriebswelle eines elektromotorischen Antriebes angetrieben wird. In kreisringförmig auf den Kurvenscheiben angeordneten Löchern oder Bohrungen greifen Mitnehmerbolzen, welche bevorzugt Mitnehmerrollen tragen, ein. Die Mitnehmerbolzen sind mit einer Mitnehmerscheibe verbunden, welche ihrerseits die zentrisch angeordneter Abtriebswelle trägt. Mit derartigen Exzentergetrieben können Übersetzungen von ca. 6:1 bis 119:1 in einer einzigen Stufe realisiert werden. Die Getriebe zeichnen sich durch eine große Zuverlässigkeit und Robustheit aus, da rein wälzende Bewegungsabläufe auftreten.

Ein elektromotorischer Antrieb mit einem Stator und einem Rotor in Kombination mit einem Exzentergetriebe der eingangs genannten Art ist beispielsweise aus der DE 196 22 060 D1 bekannt. Dieses Exzentergetriebe enthält einen mit der Antriebswelle eines Elektromotors drehfest verbundenen Excenter, der über Rollenlager zwei oder mehrere gegeneinander versetzte Kurvenscheiben antreibt. Die Kurvenscheiben weisen ein Außenprofil in Form eines geschlossenen Cycloidenzugs auf und wälzen sich durch Drehung des Excenters entlang des Innenmumfangs eines feststehenden Bolzenringes ab. Die Kurvenscheiben sind mit kreisförmig angeordneten Bohrungen versehen, in die auf einer Mitnehmerscheibe kreisförmig angeordnete Mitnehmerbolzen eingreifen. Jede Kurvenscheibe hat mindestens einen Kurvenabschnitt weniger als Bolzen im Bolzenring angeordnet.

Wenn sich die Kurvenscheiben durch Drehung des Excenters im Uhrzeigersinn innerhalb des Bolzenringes fortbewegen, drehen sie sich gleichzeitig entgegen dem Uhrzeigersinn um ihre eigene Achse. Es entsteht eine Drehbewegung mit einer wesentlich geringeren Drehzahl in entgegengesetzter Richtung. Bei einer vollen Umdrehung des Excenters wälzt sich jede Kurvenscheibe um einen Kurvenabschnitt weiter. Über die Mitnehmerbolzen wird die reduzierte Drehbewegung der Kurvenscheiben auf die Mitnehmerscheibe übertragen. Auf der Mitnehmerscheibe ist eine Aufnahmebuchse aufgeschraubt, in der die Abtriebswelle drehfest fixiert ist.

Der nächste Stand der Technik ist in Dokument JP-A-55058768 veröffentlicht. Durch US-B-6369477, DE-C-4339791 und US-A-5606209 sind weitere Antriebe gemäß den Stand der Technik bekannt. Ausgehend von diesem bekannten Stand der Technik, der voll umfänglich in den Offenbarungsgehalt der vorliegenden Patentanmeldung durch ausdrückliche Rückbezug aufgenommen ist, liegt der Erfindung die Aufgabe zugrunde, einen elektromotorischen Antrieb mit einem Stator und einem Rotor in Kombination mit einem Exzentergetriebe der eingangs genannten Art dahingehend weiter zubilden, dass der Aufbau vereinfacht, die Kosten reduziert und auch der Bauraum gegenüber herkömmlichen Ausführungsformen verringert ist.

Diese Aufgabe wird bei dem elektromotorischen Antrieb der eingangs genannten Art im wesentlichen durch der Antrieb gemäß Anspruch 1 gelöst.

Dadurch, dass die Scheiben beziehungsweise Kurvenscheiben selbst unmittelbar von dem elektromotorischen Antrieb in Bewegung versetzt werden, ist sozusagen eine integrierte Bauform eines elektromotorischen Antriebes in Kombination mit einem Exzentergetriebe geschaffen. Indem die Kurvenscheiben selbst nicht nur die Funktion der Getriebemittel, sondern auch einen Teil der Antriebsmittel bilden, werden gegenüber dem getrennten herkömmlichen Aufbau von Antrieb und Getriebe Komponenten eingespart und der Bauraum wie auch die Kosten verringert.

Nach einer ersten vorteilhaften Ausgestaltung der Erfindung ist es vorgesehen, dass an der Innenumfangswandung der Kammer mittels Strombeaufschlagung der Spulen ein umlaufendes Statormagnetfeld erzeugt wird. Dieses umlaufende Statormagnetfeld sorgt dafür, dass die Scheiben unmittelbar aufgrund der Wirkung des Magnetfeldes in eine der Innenumfangswandungen der Kammer abwälzende Antriebsbewegungen versetzt werden.

Von Vorteil ist es vorgesehen, dass mehrere, die Kammerwandung bildende Polschuhe vorgesehen sind, denen jeweils eine strombeaufschlagte Spule zugeordnet ist. Augrund des entlang der Kammerwandung umlaufenden Magnetfeldes werden die Scheiben beziehungsweise Kurvenscheiben unmittelbar in Antriebsbewegung versetzt.

Dabei bietet es sich an, dass die Scheiben selbst als Permanentmagnete ausgebildet sind oder aus einem ferromagnetischen Material bestehen. Beispielsweise können die Scheiben derart magnetisiert sein, dass auf dem Außenumfang der magnetische Nordpol oder Südpol und im Inneren der Scheibe der magnetische Südpol oder Nordpol angeordnet ist. Es versteht sich, dass auch anderer Arten der Magnetisierung der Scheiben beziehungsweise Kurvenschieben vorgesehen sein können.

Nach einer anderen vorteilhaften Ausgestaltung der Erfindung sind die Scheiben gegensinnig magnetisiert, so dass beispielweise die eine Scheibe am Außenumfang einen magnetischen Nordpol und die andere Scheibe am Außenumfang den magnetischen Südpol besitzt. Um möglichen Schlupf zu vermeiden, ist es gemäß der Erfindung vorgesehen dass die Außenumfangswandung der Scheiben mit der Innenumfangswandung der Kammer über eine Verzahnung in Eingriff steht. Bei dieser Verzahnung kann es sich beispielsweise um die bereits erwähnte Cycloidenverzahnung oder eine sonstige Verzahnung handeln.

Gemäß der Erfindung sind die Mitnehmerbolzen mit einer Mitnehmerscheibe verbunden, die mit der Abtriebswelle gekoppelt ist.

Weiterhin ist es gemäß der Erfindung vorgesehen, dass die Mitnehmerscheibe an einer Kammer zur zentrischen Achse drehbar gelagert und die Achse durch mittige Bohrungen der Scheibe geführt ist.

Es versteht sich, dass die Bohrungen für die Mitnehmerbolzen beziehungsweise die Achse um das Maß der Exzentrizität der Scheiben größer ausgebildet sind als die in die Bohrungen eingreifenden Mitnehmerbolzen beziehungsweise die Achse.

Nach einer anderen Ausgestaltung der Erfindung ist es vorgesehen, dass die Mitnehmerbolzen um die eigene Achse drehbar gelagert sind beziehungsweise Mitnehmerrollen tragen.

Zur Lagerung der Scheiben in der Kammer ist es vorgesehen, dass zwischen den Scheiben und gegebenenfalls zwischen der Mitnehmerscheibe und einer Scheibe Distanzstücke angeordnet sind.

Von Vorteil ist die untere Scheibe auf einem Distanzring oder dergleichen Distanzmittel gelagert.

Die Distanzscheiben beziehungsweise Distanzringe oder sonstigen Distanzmittel sind bevorzugt aus Kunststoff hergestellt.

Für den Fall, dass zwei Scheiben beziehungsweise Kurvenscheiben zum Einsatz gelangen, bietet es sich von Vorteil an, dass die beiden Scheiben um ca. 180° exzentrisch versetzt in der Kammer angeordnet sind.

Weiter Ziele, Anwendungsmöglichkeiten, Vorteile und Ausgestaltungen der Erfindung ergeben sich aus der nachfolgenden Beschreibung eines Ausführungsbeispieles anhand der Zeichnungen. Dabei bilden alle beschriebenen und/oder bildlich dargestellten Merkmale für sich oder in beliebiger, sinnvoller Kombination den Gegenstand vorliegender Erfindung, auch unabhängig von ihrer Zusammenfassung in den Ansprüchen oder deren Rückbeziehung.

Es zeigen:
- Figur 1: eine Prinzipdarstellung eines Ausführungsbeispiels der Erfindung und
- Figuren 2 bis 5: den möglichen Verlauf und die Auswirkungen des Statorfeldes auf die beiden Scheiben beziehungsweise Kurvenscheiben des Exzentergetriebes, wobei das Statorfeld in einem Winkel von jeweils 60 ° wechselt.

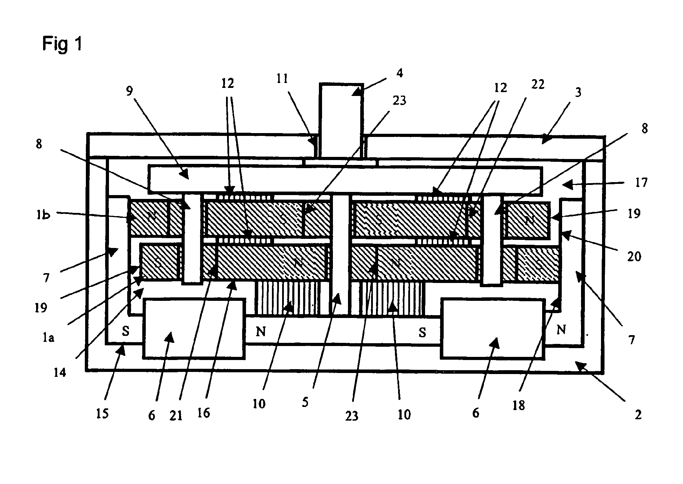

In Figur 1 ist ein elektromotorischer Antrieb 14 mit einem Stator 15 und einem Rotor 16 in Kombination mit einem Exzentergetriebe 17 dargestellt. Das Exzentergetriebe 17 weist zwei in einer wesentlichen ringförmigen Kammer 18 übereinander angeordnete exzentrisch versetzte Scheiben 1a, 1b auf, die aufgrund der Antriebsbewegung des Antriebes 14 mit ihrer Außenumfangswandung 19 an einer Innenumfangswandung 20 der Kammer 18 abwälzen. Die Scheiben 1a, 1b besitzen im wesentlichen kreisringförmig angeordnete Bohrungen 21, 22 in die Mitnehmerbolzen 8 eintauchen. Die Mitnehmerbolzen 8 sind mit einer Abtriebswelle 4 verbunden.

Die Scheiben 1a, 1b liegen an jeweils im wesentlichen diametral einander gegenüberliegenden Abschnitten mit ihrer Außenumfangswandung 19 an der Innenumfangswandung 20 der Kammer 18 an. Der Durchmesser der Scheiben 1a, 1b beziehungsweise Kurvenscheiben ist, wie aus Figur 1 ersichtlich ist, geringer als der Innendurchmesser der Kammer 18, die auch als Motorgehäuse bezeichnet werden kann. Die Scheiben 1a, 1b sind als Rotor 16 des elektromotorischen Antriebs 14 ausgebildet und werden unmittelbar vom Stator 15 in Antriebsbewegung versetzt.

Mittels strombeaufschlagter Spulen 6 wird an der Innenumfangswandung 20 der Kammer 18 ein umlaufendes Statormagnetfeld 13 erzeugt. Insoweit sind mehrere, die Kammergewandung umlaufende Polschuhe 7 vorgesehen, denen jeweils eine strombeaufschlagte Spule 6 zugeordnet ist.

Die Scheiben 1a, 1b sind als Permanentmagnete ausgebildet oder bestehen aus ferromagnetischen Material, wobei die Scheiben 1a, 1b, wie aus den Figuren ersichtlich, gegensinnig magnetisiert sind.

Durch das mittels der Spulen 6 und Polschuhe 7 erzeugte umlaufende Magnetfeld, welches auf die Scheiben 1a, 1b einwirkt, werden diese in eine Drehbewegung versetzt. Die exzentrischen Anordnung der Scheiben 1a, 1b sorgt dafür, dass sich die Scheiben nicht einfach um ihre jeweilige Drehachse drehen, sondern entlang der Polschuhe beziehungsweise der Innenumfangswandung 22 der Kammer 18 abwälzen. Das heißt, dass bei jedem Umlauf der Scheiben 1a, 1b beziehungsweise Kurvenscheiben und des Statormagnetfeldes 13 sich die Scheiben nur ein kleines Stück um die eigene Achse drehen.

Zur Übertragung dieser Bewegung der als Rotor 16 ausgebildeten Scheiben 1a, 1b auf die Abtriebswelle 4 ist eine Mitnehmerscheibe 9 vorgesehen, auf der zwei oder mehrere, vorzugsweise drehbar gelagerte Mitnehmerbolzen 8 angebracht sind, welche in kreisrunde, übereinander liegende Bohrungen 21, 22 jeder Kurvenscheibe 1a, 1b eintauchen. Aufgrund dieser Maßnahme wird die Antriebsbewegung der Scheiben 1a, 1b auf die Mitnehmerbolzen 8 und damit die Mitnehmerscheibe 9 und die Abtriebswelle 4 übertragen. Die Mitnehmerscheibe 9 und damit die Abtriebswelle 4 ist vorzugsweise drehbar um eine feststehende Achse 5 gelagert, welche durch im wesentlichen mittig angeordnete Bohrungen 23 der Scheiben 1a, 1b durchtaucht. Da die Scheiben 1a, 1b im Durchmesser kleiner sind als der Innendurchmesser der Kammer 18 beziehungsweise des Motorgehäuses und die Scheiben 1a, 1b mit ihrer Außenumfangswandung 19 an der Innenumfangswandung 20 der Kammer 18 abwälzen, sind die Bohrungen 21, 22, 23 um das Maß der Exzentrizität der Scheiben 1a, 1b größer gehalten als der Durchmesser der Mitnehmerbolzen 8 beziehungsweise der Achse 5.

Um Schlupf zwischen der Außenumfangswandung 19 der Scheiben 1a,1b und der Innenumfangswandung 20 der Kammer 18 zu vermeiden, ist vorzugsweise sowohl an der Innenwandung der Kammer 18 beziehungsweise den Polschuhen 7 als auch an der Außenumfangswandung 19 der Scheiben 1a, 1b ein vorzugsweise aus Kunststoff bestehender Zahnkranz oder ähnliches angebracht, welche miteinander in Eingriff stehen.

Weiterhin sind zwischen der Scheiben 1a, 1b Distanzscheiben 12 angeordnet, die dafür sorgen, dass sich die Scheiben 1a, 1b beziehungsweise die Scheibe 1b und die Mitnehmerscheiben 9 nicht berühren. Die untere Scheibe 1a liegt bevorzugt auf einem, um die feststehende Achse 5 angebrachten Distanzring 10, welcher mit einem Gehäuse 2 verbunden ist, das den Antrieb 14 sowie das Exzentergetriebe 1 aufnimmt. Das Gehäuse 2 ist mit einem Gehäusedeckel 3 verschlossen, wobei in dem Gehäusedeckel 3 ein Lager 11 für die aus dem Gehäusedeckel 3 hervorstehende Abtriebswelle 4 vorgesehen ist.

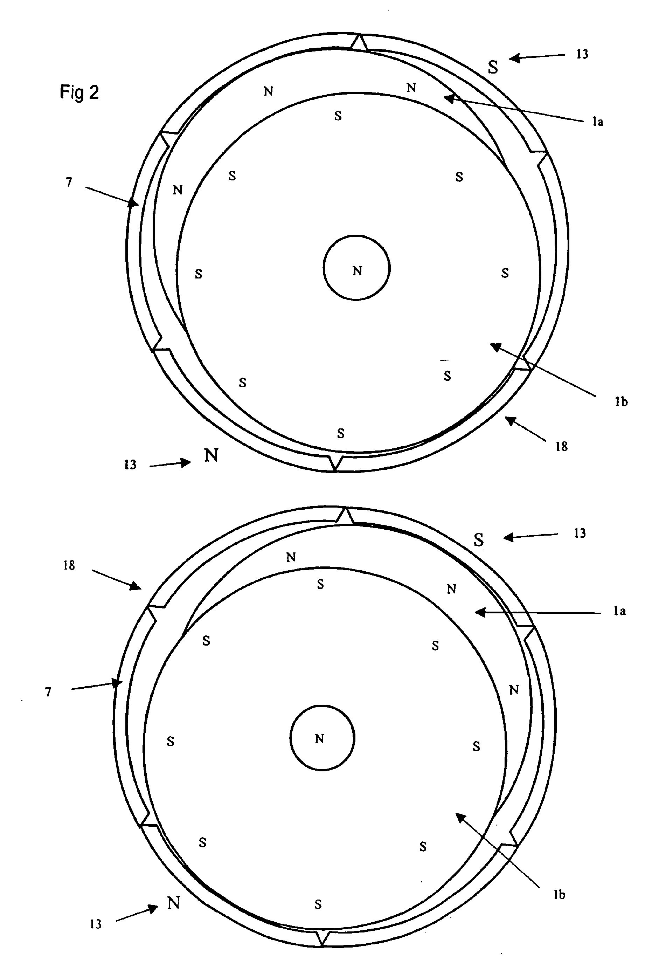

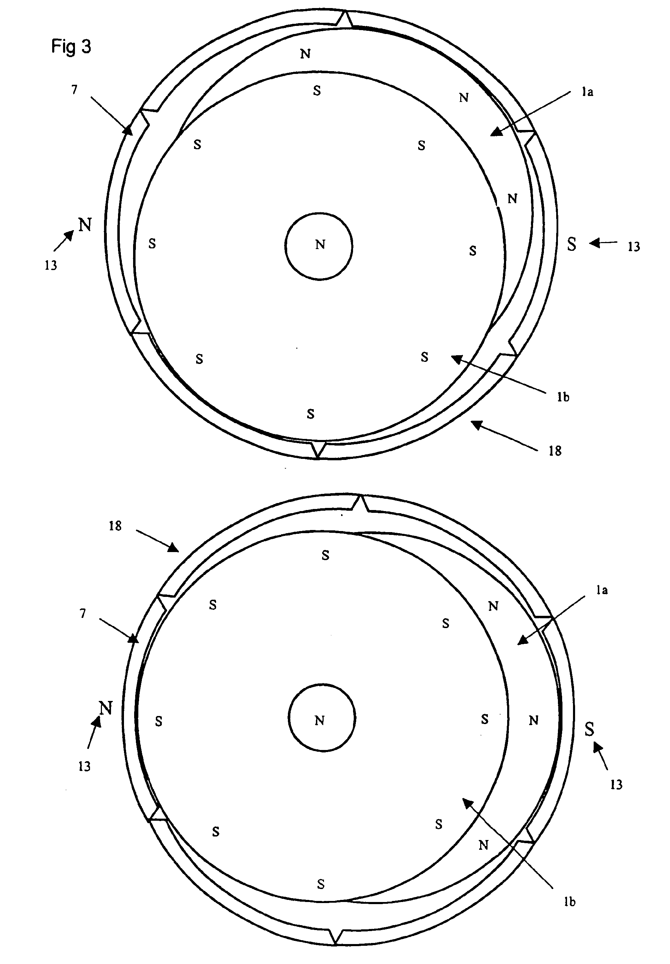

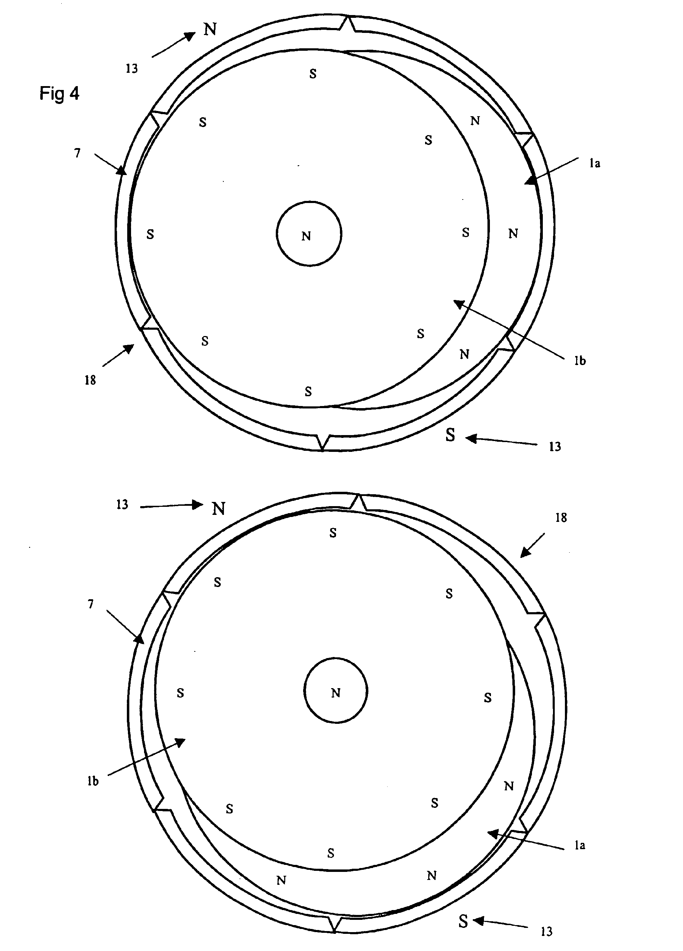

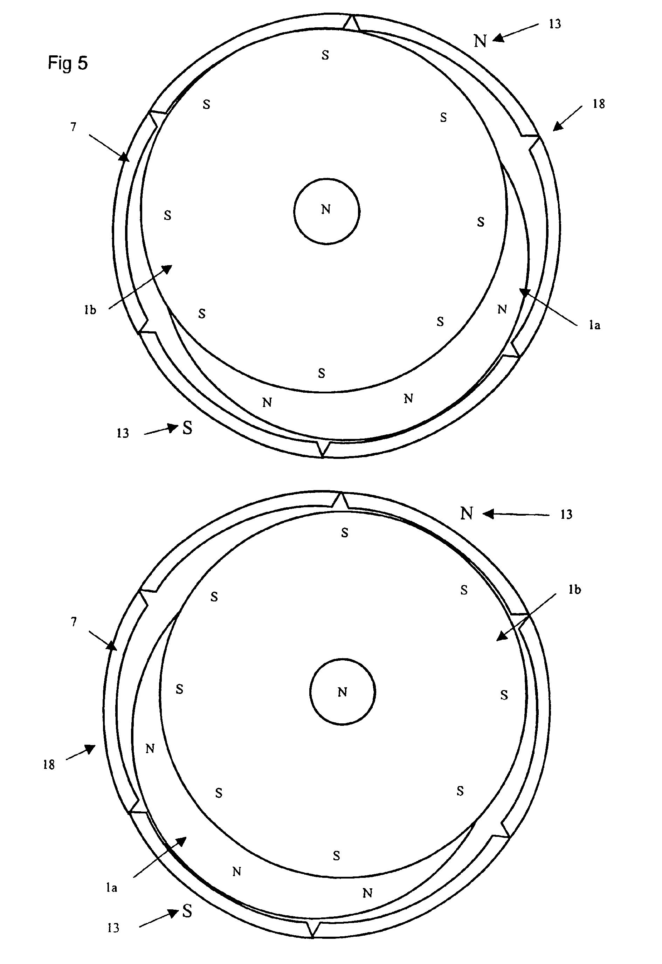

In den Figuren 2-5 ist zur Veranschaulichung der Funktionsweise eine Draufsicht auf einen möglichen Bewegungsverlauf der Scheiben 1a, 1b relativ zur Kammer 18 beziehungsweise dem Stator dargestellt. Dabei wechselt da Statorfeld bei dem hier gewählten Ausführungsbeispiel in einem Winkel von 60°. In der oberen Abbildung jeder Figur ist der Ausgangszustand beim Einschalten beziehungsweise Anlegen des Statorfeldes dargestellt, während in dem unteren Bild der jeweiligen Figur die entsprechende Auswirkung auf die Scheiben 1a, 1b, welche den Rotor 16 bilden, dargestellt ist. Insgesamt ist in den Figuren 2-5 ein halber Umlauf des Statorfeldes und damit ein halber Umlauf der Scheiben 1a, 1b dargestellt.

### Bezugszeichenliste

- 1a: Scheibe
- 1b: Scheibe
- 2: Gehäuse
- 3: Gehäusedeckel
- 4: Abtrieb
- 5: Achse
- 6: Spulen
- 7: Polschuh
- 8: Mitnehmerbolzen
- 9: Mitnehmerscheibe
- 10: Distanzring
- 11: Lager
- 12: Distanzscheibe
- 13: Statormagnetfeld
- 14: Antrieb
- 15: Stator
- 16: Rotor
- 17: Exzentergetriebe
- 18: Kammer
- 19: Außenumfangswandung
- 20: Innenumfangswandung
- 21: Bohrung
- 22: Bohrung
- 23: mittige Bohrung

## Patentansprüche

1. Elektromotorischer Antrieb (14) mit einem Stator (15) und einem Rotor (16) in Kombination mit einem Exzentergetriebe (17), welches wenigstens zwei in einer im wesentlichen ringförmigen Kammer (18) übereinander angeordnete, exzentrisch versetzte Scheiben (1a), (1b) aufweist, die aufgrund der Antriebsbewegung des Antriebes (14) mit ihrer Außenumfangswandung (19) an einer Innenumfangswandung (20) der Kammer (18) abwälzen, wobei die Scheiben (1a), (1b) im wesentlichen kreisringförmig angeordnete Bohrungen besitzen, in die Mitnehmerbolzen (8) eintauchen, die mit einer Antriebswelle (4) verbunden sind, wobei die Scheiben (1a, 1b) als Rotor (16) ausgebildet sind, die unmittelbar vom Stator (15) in Antriebsbewegung versetzt werden und die Mitnehmerbolzen (8) mit einer Mitnehmerscheibe (9) verbunden sind, die mit der Abtriebswelle (4) gekoppelt ist, **dadurch gekennzeichnet, dass** die Außenumfangswandung (19) der Scheiben (1a, 1b) mit der Innenumfangswandung (20) der Kammer (18) über eine Verzahnung in Eingriff steht und die Mitnehmerscheibe (9) an einer zur Kammer (18) zentrischen Achse (5) drehbar gelagert ist, wobei die Achse (5) durch mittige Bohrungen (23) der Scheiben (1a, 1b) geführt ist.

2. Antrieb nach Anspruch 1, **dadurch gekennzeichnet, dass** an der Innenumfangswandung (20) der Kammer (18) mittels strombeaufschlagter Spulen (6) ein umlaufendes Statormagnetfeld (13) erzeugt wird.

3. Antrieb nach Anspruch 1 oder 2, **dadurch gekennzeichnet, dass** mehrere die Kammerwandung bildende Polschuhe (7) vorgesehen sind, denen jeweils eine strombeaufschlagte Spule (6) zugeordnet ist.

4. Antrieb nach einem der vorhergehenden Ansprüchen, **dadurch gekennzeichnet, dass** die Scheiben (1a), (1b) als Permanentmagnete ausgebildet sind oder aus ferromagnetischem Material bestehen.

5. Antrieb nach Anspruch 4, **dadurch gekennzeichnet, dass** die Scheiben (1a), (1b) gegensinnig magnetisiert sind.

6. Antrieb nach einem der vorhergehenden Ansprüchen, **dadurch gekennzeichnet, dass** die Bohrungen (21), (22), (23) um das Maß der Exzentrizität der Scheiben (1a), (1b) größer als der Durchmesser der Mitnehmerbolzen (18) beziehungsweise der Achse (5) sind.

7. Antrieb nach einem der vorhergehenden Ansprüchen, **dadurch gekennzeichnet, dass** die Mitnehmerbolzen (8) um die eigene Achse drehbar gelagert sind.

8. Antrieb nach einem der vorhergehenden Ansprüchen, **dadurch gekennzeichnet, dass** zwischen den Scheiben (1a), (1b) und gegebenenfalls zwischen Mitnehmerscheibe (9) und einer Scheibe (1a), (1b) Distanzscheiben (12) angeordnet sind.

9. Antrieb nach eine der vorhergehenden Ansprüche, **dadurch gekennzeichnet, dass** eine untere Scheibe (1a), (1b) auf einem Distanzring (10) gelagert ist. -

10. Antrieb nach einem der vorhergehenden Ansprüche 11 oder 12, **dadurch gekennzeichnet, dass** die Distanzscheiben (12) beziehungsweise Distanzringe (10) aus Kunststoff bestehen.

11. Antrieb nach einem der vorhergehenden Ansprüchen **dadurch gekennzeichnet, dass** die beiden Scheiben (1a), (1b) um ca. 180° exzentrisch versetzt in der Kammer (18) angeordnet beziehungsweise aufgenommen sind.

## Claims

1. Electric-motor drive (14) with a stator (15) and a rotor (16) in combination with an eccentric transmission (17), which comprises at least two discs (1a, 1b), which are arranged one above the other in a substantially annular chamber (18) and eccentrically offset and which by reason of the drive movement of the drive (14) roll by their outer circumferential wall (19) along an inner circumferential wall (20) of the chamber (18), wherein the discs (1a, 1b) have substantially circularly arranged bores into which entrainer bores (8) connected with a drive shaft (4) enter, wherein the discs (1a, 1 b) are constructed as a rotor (16) which is set into drive motion directly by the stator (15) and the entrainer pins (8) are connected with an entrainer disc (9) coupled with the drive output shaft (4), **characterised in that** the outer circumferential wall (19) of the discs (1a, 1b) is disposed in engagement with the inner circumferential wall (20) of the chamber (18) by way of a toothing and the entrainer disc (9) is rotatably mounted at an axle (5) central with respect to the chamber (18), wherein the axle (5) is led through central bores (23) of the discs (1a, 1 b).

2. Drive according to claim 1, **characterised in that** a circulating stator magnetic field (13) is produced at the inner circumferential wall (20) of the chamber (18) by means of coils (6) acted on by current.

3. Drive according to claim 1 or 2, **characterised in that** several pole shoes (7) forming the chamber wall and each respectively associated with a coil (6) acted on by current are provided.

4. Drive according to one of the preceding claims, **characterised in that** the discs (1a, 1b) are constructed as permanent magnets or consist of ferromagnetic material.

5. Drive according to claim 4, **characterised in that** the discs (1a, 1b) are magnetised in opposite sense.

6. Drive according to one of the preceding claims, **characterised in that** the bores (21, 22, 23) are greater, by the mass of eccentricity of the discs (1a, 1b), than the diameter of the entrainer pins (18) or of the axle (5).

7. Drive according to one of the preceding claims, **characterised in that** each of the entrainer pins (8) is mounted to be rotatable about its axis.

8. Drive according to one of the preceding claims, **characterised in that** spacer discs (12) are arranged between the discs (1a, 1b) and optionally between entrainer disc (9) and a disc (1 a, 1b).

9. Drive according to one of the preceding claims, **characterised in that** a lower disc (1a, 1b) is mounted on a spacer ring (10).

10. Drive according to one of the preceding claims 8 or 9 **characterised in that** the spacer discs (12) or spacer rings (10) consist of plastics material.

11. Drive according to one of the preceding claims, **characterised in that** the two discs (1a, 1b) are arranged or received in the chamber (18) to be eccentrically offset by approximately 180°.

## Revendications

1. Système d'entraînement (14) à moteur électrique, muni d'un stator (15) et d'un rotor (16) en combinaison avec un mécanisme à excentrique (17), lequel présente au moins deux disques (1a), (1b) déplacés de manière excentrique, disposés l'un sur l'autre dans une chambre (18) essentiellement en forme d'anneau, lesquels roulent, du fait du mouvement d'entraînement du système d'entraînement (14), avec leur paroi circonférentielle externe (19) sur une paroi circonférentielle interne (20) de la chambre (18), les disques (1a), (1b) possédant des alésages disposés essentiellement en forme d'anneau de cercle, dans lesquels s'enfoncent des broches d'entraînement (8) qui sont reliées à un arbre d'entrée (4), les disques (1a, 1b) étant réalisés comme un rotor (16) qui sont déplacés immédiatement par le stator (15) en mouvement d'entraînement, et les broches d'entraînement (8) étant reliées à un disque d'entraînement (9) qui est couplé à l'arbre de sortie (4), **caractérisé en ce que** la paroi circonférentielle externe (19) des disques (1a, 1b) est en prise avec la paroi circonférentielle interne (20) de la chambre (18) par le biais d'une denture et **en ce que** le disque d'entraînement (9) est logé de manière à pouvoir tourner sur un axe central (5) par rapport à la chambre (18), l'axe (5) courant à travers des alésages (23) centraux des disques (1 a, 1 b).

2. Système d'entraînement selon la revendication 1, **caractérisé en ce qu'**un champ magnétique (13) sur le pourtour du stator est généré sur la paroi circonférentielle interne (20) de la chambre (18) au moyen de bobines (6) alimentées en courant.

3. Système d'entraînement selon la revendication 1 ou 2, **caractérisé en ce que** plusieurs pièces polaires (7) formant la paroi de la chambre sont prévues, à chacune desquelles est associée une bobine (6) alimentée en courant.

4. Système d'entraînement selon l'une quelconque des revendications précédentes, **caractérisé en ce que** les disques (1a, 1b) sont réalisés comme des aimants permanents ou se composent de matériau ferromagnétique.

5. Système d'entraînement selon la revendication 4, **caractérisé en ce que** les disques (1a, 1b) sont aimantés en sens inverse.

6. Système d'entraînement selon l'une quelconque des revendications précédentes, **caractérisé en ce que** les alésages (21), (22), (23) autour de la mesure de l'excentricité des disques (1a), (1b) sont plus grands que le diamètre des broches d'entraînement (18) et/ou de l'axe (5).

7. Système d'entraînement selon l'une quelconque des revendications précédentes, **caractérisé en ce que** les broches d'entraînement (8) sont logées de manière à pouvoir tourner autour de leur propre axe.

8. Système d'entraînement selon l'une quelconque des revendications précédentes, **caractérisé en ce que** des disques d'écartement (12) sont disposés entre les disques (1a), (1b) et éventuellement entre le disque d'entraînement (9) et un disque (1a), (1b).

9. Système d'entraînement selon l'une quelconque des revendications précédentes, **caractérisé en ce qu'**un disque inférieur (1a), (1b) est logé sur une bague d'écartement (10).

10. Système d'entraînement selon l'une quelconque des revendications précédentes 8 ou 9, **caractérisé en ce que** les disques d'écartement (12) et/ou les bagues d'écartement (10) sont en plastique.

11. Système d'entraînement selon l'une quelconque des revendications précédentes, **caractérisé en ce que** les deux disques (1a), (1b) sont disposés et/ou reçus dans la chambre (18) en étant déplacés excentriquement d'environ 180°.
